(19) Europäisches Patentamt
European Patent Office
Office européen des brevets

(11) Publication number: **0 302 940**
**A1**

(12) # EUROPEAN PATENT APPLICATION

published in accordance with Art. 158(3) EPC

(21) Application number: **88901308.2**

(22) Date of filing: **29.01.88**

Data of the international application taken as a basis:

(86) International application number:
**PCT/JP88/00077**

(87) International publication number:
**WO88/05934 (11.08.88 88/18)**

(51) Int.Cl.$^3$: **G 05 B 15/02**
G 05 B 9/02, G 05 B 21/02

(30) Priority: **30.01.87 JP 20317/87**

(43) Date of publication of application:
**15.02.89 Bulletin 89/7**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **INOUE, Michiya**
**28-6, Hirayama 5-chome**
**Hino-Shi Tokyo 191(JP)**

(72) Inventor: **SAITO, Yoshiyuki**
**Funuc Hino Shataku 301 3-27, Tamadaira**
**Hino-shi Tokyo 191(JP)**

(74) Representative: **Brunner, Michael John et al,**
**GILL JENNINGS & EVERY 53-64 Chancery Lane**
**London WC2A 1HN(GB)**

(54) **SIGNAL INPUT DEVICE.**

(57) A signal input device comprising a plurality of combinations (3), each including an analog filter (31) for filtering harmonics and an electric signal recognizing means (32) for recognizing an electric signal to digitize it; a multiplexer means (4) connected to said plurality of combinations (3) of the analog filter (31) and the electric signal recognizing means (32); a digital filter (5) for receiving an input signal at predetermined time intervals (at fixed time intervals, or adjustable time intervals, or time intervals selected depending upon said plurality of combinations (3) of the analog filter (31) and the electric signal recognizing means (32)) and passing said input signal only when signals consequentially received at an adjustable interval are identical; demultiplexer means (6) for distributing the output signal from the digital filter (5) to a plurality of output circuits in synchronism with the multiplexer means (4); and means (7) for controlling the demultiplexer means (6) and the multiplexer means (4) in synchronism with each other.

Fig. 4

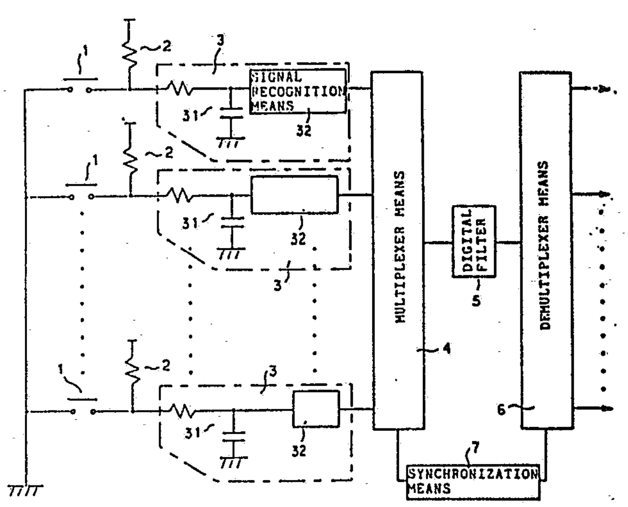


EP 0 302 940 A1

# SPECIFICATION

## TITLE OF THE INVENTION

## ELECTRIC SIGNAL INPUT EQUIPMENT

## TECHNICAL FIELD OF THE INVENTION

This invention relates to an electric signal input equipment employable for inputting electric signals which are picked up from evternal movable contacts, into a regulating unit which employs a computor, such as a regulating unit of a numerical control machine tool or the like. More specifically, this invention relates to an improvement applicable to an electric signal input equipment, for the purposes to simplify the structure thereof and to decrease the quantity of the ingredients employed therein.

## BACKGROUND OF THE INVENTION

An electric signal input equipment is essential for a regulating unit which employs a computor, because such a regulating unit as an regulating unit of a numerical control machine tool is required to be given electric signals which represent the various mechanical situation of the machine tool proper, e.g. the position of a workpiece, the position of a tool, et al. This is because these signals are necessary to control such a regulating unit based on the principle of negative feedback control system.

A closing action of a movable contact is enevitably accompanied by "chattering phenomena" in which the movable contact repeats action of closings and openings in high frequency during a period of approximately 1 millisecond in advance of a stable closed position.

Since the signals which would be picked up during the aforementioned unstable period evidently cause a misoperation for a regulating unit, whenever they are input the regulating unit, it is required to input the regulating unit exclusively with the genuine signals which are picked up after the chattering period terminates, ignoring the signals which may be picked up during the unstable period.

Although most semiconductor devices employed for control circuits particularly employing computors e.g. control circuits of numerical control machine tools, use DC5V, the working voltage of the external contacts which sense and input the aforementioned various external signals into regulating units is not necessarily standardized to 5V. Therefore, the voltage of the input signals input into the regulating units by such external contacts is desirable to be converted to DC5V, prior to being input to the regulating units. Further, since possibilities can not be denied in which external noises are picked up to be commingled into the circuits connecting the external contacts and the regulating units, it is required to delete such noises from the input signals.

To satisfy this requirement, the inventors of this invention completed an invention of an electric signal input equipment provided an assembly of an analog filter and a digital filter and which has an excellent degree in reliability and responsibility.

This newly developed electric signal input equipment, of which the schematic drawing is illustrated in Fig. 1, is provided an analog filter 31 for filting higher harmonics, an input signal recognition means 41 for periodically recognizing the electric signal which is output by the analog filter 31 with a predetermined specific period (sampling period) and for converting the same into a numerical signal, a first memory means 51 for memorizing the numerical signal recognized by the input signal recognition means 41, a second memory means 61 for memorizing the numerical signal which is periodically transfered from the first memory means 51 with a predetermined specific period (sampling period), and a comparator means 71 for comparing the numerical signal memorized in the second memory means 61 with the numerical signal memorized in the first memory means 51 and for outputing the numerical signal memorized in the second memory means 61 as a genuine input signal, only in the case where the numerical signal memorized in the second memory means 61 is identical to the numerical signal memorized in the first memory means 51 or only in the case where an input signal was received consecutively twice. The numeral 1 is an external contact and the numeral 2 is a resistor for limiting the signal voltage.

The philosophy of this electric signal input equipment is a combination of (a) an idea that a sampling system having a sampling period longer than the corresponding chattering period provides no possibility wherein any input signals are recognized during the chattering period, and (b) an idea that an analog filter provided at the input side of the sampling circuit is effective to protect each element (semiconductor devices or the like) constituting the sampling circuit included in this electric signal input equipment. Since the electric signal input equipment of this invention entirely contains the aforementioned electric signal input equipment, the function thereof will be described below.

Referring to Fig. 2 illustrating the time chart of the aforementioned electric signal input equipment, chart (A) indicates the input signal, in which a period given a label (a) indicates a chattering period, and the input signal received during this period (a) must be ignored. A label (b) indicates a surge voltage caused by the external noise. This surge voltage must be prohibited from entering into a regulating unit.

Referring to chart (B) of Fig. 2, for example, the first sampling is supposed to be conducted just before the initiation of a chattering period $t_1$, and the sampling period $t_2$ is supposed to be longer than the chattering period $t_1$. Under this condition, the second sampling (the first sampling conducted after commencement of sampling) is assumed to receive a stable or reliable input signal. In this case, an input signal recognized by one sampling can be employed as a genuine input signal.

Secondly, referring to chart (C) of Fig. 2, the first sampling is supposed to be conducted in the middle of a chattering period $t_1$ and the equipment is supposed to be designed to ignore the input signal which occurs during a chattering period (or the first sampling signal). In this case, the second sampling (Although being the sampling conducted second after commencement of inputting action of input signals, the first sampling from the virtual viewpoints.) is assumed to receive a stable or reliable input signal. Therefore, also in this case, an input signal recognized by one sampling can be employed as a genuine input signal.

Thirdly, referring to chart (D) of Fig. 2, the first sampling is supposed to be conducted in the middle of a chattering period $t_1$, and the first sampling is supposed to recognize an input signal which occurs during the chattering period, and further the sampling period $t_2$ is supposed to be longer than the chattering period $t_1$. In this case, an input signal recognized by the first sampling can not be employed as a genuine input signal. However, the second sampling (the sampling which is conducted second after the commencement of inputting actions of input signals) is assumed to receive a stable or reliable input signal. Therefore, two same signals which are consecutively received can be employed as a genuine input signal.

Finally, referring to chart (E) of Fig. 2, the first sampling is supposed to be conducted at the very beginning of a chattering period, and the first sampling is supposed to recognize the input signal which occurs at the very beginning of a chattering period, and further the sampling period $t_2$ is longer than the chattering period $t_1$. In this case, an input signal recognized by the first sampling can not be employed as a genuine input signal. However, the second sampling which is conducted second after the commencement of inputting actions of input signals, is assumed to receive a stable or reliable input signal. Therefore, two same signals which are consecutively receibed can be employed as a genuine input signal.

The above description means that a misrecognition of input signals occurring during chattering periods can be avoided, provided the sampling period $t_2$ is selected longer than the chattering period $t_1$ and provided an equipment is designed to recognize an input signal exclusively in the case where the consecutively received two input signals are identical to each other.

Incidentally, however, since semiconductor devices or the like has a dielectric strength of a lesser magnitude, an analog filter is required to be installed in the input circuit of a sampling circuit, for the purpose to delete the surge voltage illustrated by a label (b) in the chart (A) of Fig. 2.

Since this electric signal input equipment is readily realized by employing a computor, the function thereof will be described below, referring to a flow chart.

Referring to Fig. 3 illustrated on the assumption that an input signal which passed through an analogfilter 31 has been memorized in the first memory means 51, after being recognized by the input signal recognizing means 41. this is because this flow chart is written on the basis that signal inputting activities continue undecided period.

The signal memorized in the first memory means 51 is transferred to the second memory means 61 periodically every predetermined sampling period. (aa)

The input signal recognition means 41 recognizes the next signal which passes through the analog filter 31 next, and transfers the next signal to the first memory means 51. (bb)

The signal memorized in the first memory means 51 is compared with that memorized in the second memory means 61. If these two are identical to each other, the signal is recognized as a genuine input signal, and is output to the following stage or usually to a computor or the like. On the contrary, if these two signals are different from each other, the outputting action of this signal to a computor or the like is suspended . After a predetermined sampling period, the input signal recognition means 41 recognizes the next signal which passes through the analog filter 31 next, and memorizes the signal in the first memory means 51. Incidentally, the signal memorized in the first memory means 51 is compared with that memorized in the second memory means 61. If these two signals are identical to each other, the signal is recognized as a genuine input signal

and is output to the following stage or to a computor or the like. (cc)

As described above, although the aforementioned predetermined sampling period is required to be longer than the chattering period, the aforementioned predetermined sampling period is not required to be much longer than the chattering period. Therefore, even including a margine to some extent, The aforementioned electric signal input equipment has a sufficiently quick response speed. It is of course possible to remain the sampling period adjustable to be finalized later in compliance with the actual chattering period of an external contact in question.

This newly developed electric signal input equipment is satisfactory from the viewpoints of reliability and responsibility, because it has no possibility in which it reads an erroneous input signal which is input during a chattering period. In the case where it has a plurality of input circuits, however, it is inevitably involved with drawbacks in which the quantity of ingredients constituting the electric signal input equipment becomes large and the structure thereof is complicated.

The object of this invention is to provide an electric signal input equipment which has advantages that it has no possibility to read an erroneous signal which is input during a chattering period and that it is simple in structure and it is little in the quantity of ingredients thereof.

DISCLOSURE OF THE INVENTION

An electrical signal input equipment in accordance with this invention is provided a plurality of assemblies (3) of an analog filter (31) for filting higher harmonics and an electrical signal recognition means (32), a multiplexer means (4) connected with the aforementioned plurality of assemblies (3) of an analog filter (31) for filting higher harmonics and an electrical signal recognition equipment (32), a digital filter (5) which is input input signals periodically every predetermined period and output output signals exclusively under conditions that two consecutive input signals are identical to each other, a demultiplexer means (6) which distributes the output signals of the digital filter (5) in synchronization with the multiplexer means (4), and a synchronization means (7) which controls the demultiplexer means (6) and the multiplexer means (4) in synchronization to each other. The aforementioned electrical signal recognition means (32) can be realized by employing a comparator or a photocoupler, both of which are available in the prior art.

Provided the aforementioned digital filter (5) of the electric signal input equipment is allowed a variable length of time in which each input signal is received, the electric signal input equipment can be readily standardized, resultantly causing advantages from the aspects of production process, handling, et al. thereof.

Since the chattering period usually varies for each of the external contacts, the length of the time in which the aforementioned digital filter 5 of the electric signal input equipment is allowed to be input (a sampling period) is desired to be selected individually for each of the assemblies 3 of plural analog filters 31 and electric signal recognition means 32.

## BRIEF DESCRIPTION OF THE DRAWINGS

Fig. 1 is a schematic drawing of an electrical signal input equipment available in the prior art and which was developed by the inventors of this invention and is entirely employed in the electric signal input equipment of this invention,

Fig. 2 is a time chart for explanation of the function of an electrical signal input equipment available in the prior art and which was developed by the inventors of this invention and is entirely employed in the electric signal input equipment of this invention,

Fig. 3 is a flow chart of an electrical signal input equipment available in the prior art and which was developed by the inventors of this invention and is entirely employed in the electric signal input equipment of this invention,

Fig. 4 is a schematic drawing of an electrical signal input equipment in accordance with one embodiment of this invention,

Figs. 5 and 6 are block diagrams of two examples of input signal recognition means employable for an electric signal input equipment in accordance with one embodiment of this invention, and

Fig. 7 is a flow chart of an electrical signal input equipment in accordance with one embodiment of this invention.

DETAILED DESCRIPTION OF PREFERRED EMBODIMENT

Referring to drawings, a detailed description will be presented below for an electric signal input equipment in accordance with one embodiment of this invention.

Although this invention can be assembledwith a plurality of discrete circuit elements, it is more realistic to realize it by employing a computer. Therefore, the following description will be presented based on an assumption that a computer is employed.

Referring to Fig. 4 which illustrates the schematic drawing of an electric signal input equipment in accordance with one embodiment of this invention, a plurality of input circuits are connected with a multiplexer means 4. Each input circuit consists of an external contact 1 of which one terminal is grounded, a resistor 2 which determines the voltage of the input circuit, an assembly 3 of an analog filter 31 which filts higher harmonics including surge voltages caused by external noises, resultantly smoothing the input voltage even during the chattering period and an electric signal recognition means 32 which converts the input analog signals to digital signals.

Referring to Figs. 5 and 6, the aforementioned electric signal recognition means 32 can be realized by a comparator as shown in Fig. 5, a photocoupler as shown in Fig. 6, or the like.

Again referring to Fig. 4, the assembly 3 consisting of the multiplexer means 4, a digital filter 5, a demultiplexer 6 and a synchronization control means 7, is realized by a computer. The synchronization control means 7 functions to cause a combination of the multiplexer means 4 and the demultiplexer means 6 to connect each of the input circuits to the digital filter 5 in turn, to finally output exclusively genuine input signals to the following stage. The digital filter 5 functions in the same manner as was described above, referring to Fig. 3. In other words, it is input the input signal of each input circuit in turn, periodically every predetermined period, and it identifies each input signal whether or not a genuine signal and allows exclusively the genuine signals to be passed to the following stage, exclusively in the case where the two consecutive signals are identical to each other. The synchronization control means 7 functions also to distribute the genuine signals which have passed through the digital filter 5, to the corresponding circuit of the demultiplexer means 6.

Referring to Fig. 7 which illustrates a flow chart of the aforementioned computer, the function of the electrical signal input equipment in accordance with one embodiment of this invention will be described below.

The assembly 3 of the analog filter 31 and the electric signal recognition means 32 reads an electric signal of the first input circuit. (a)

The signal is given the number of the input circuit from which the signal was read, before it is input to the digital filter 5 to be determined whether or not the signal is genuine or false. (b)

Whenever the signal was recognized to be genuine, the demultiplexer (6) outputs the signal to an output circuit corresponding to the input from which the signal was input. (c)

The assembly 3 of the analog filter 31 and the electric signal recognition means 32 reads an electric signal of the each of the following circuits, in turn, to repeat the aforementioned recognition and output activities. (d)

After each of the input circuits was applied the above action, a predetermined length of pause is given, before the following turn of the above sequencial processes are applied. (e)

It is clear that the sampling period of the digital filter 5 can be designed to be adjustable. Provided the sampling period of the digital filter 5 is designed to be adjustable, the signal input equipment can be readily standardized, resulting in various advantages in the aspects of administration of production process and handling of the electric signal input equipment in accordance with this invention.

The sampling period of the digital filter 5 should be determined following the chattering period of the corresponding external contact. Therefore, if the sampling period is memorized for each input circuit, it is effective to improve the response speed of the electric signal input equipment.

Since the analog filter is a type of protective equipment, each input circuit must be equipped with an analog filter. Since the digital filter is realized by a computer, however, each input circuit is not required to be equipped with the digital filter. Based on this philosophy, the electric signal input equipment in accordance with this invention is provided only one digital filter, resulting in a simplified structure.

In other words, the electric signal input equipment in accordance with this invention is provided one set of multiplexer means, digital filter and demultiplexer commonly to all the signal input circuits. As a result, each input signal is given the number by the aforementioned multiplexer means and is applied to a digital filter to be determined whether or not it is a genuine input signal, before each of the genuine signals is distributed to the corresponding output circuit by a demultiplexer means which functions in synchronization with the multiplexer. Therefore, only one digital filter is satisfactory, regardless of the number of the input circuits, resultantly reducing the quantity of the ingredients constituting the electric signal input equipment and simplifying the structure thereof.

The aforementioned description has clarified that this invention successfully provided an electric signal input equipment which is little in the quantity of ingredients and simple in construction, in addition to that it has no possibilities to erroneously read an input signal during a chattering period.

Although this invention has been described with reference to a specific embodiment, this description is not meant to be construed in a limiting sense. Various other embodiments and/or modifications of this invention will become apparent to persons skilled in the art upon reference to the description of this invention. It is therefore contemplated that the claims will cover any such embodiments and/or modifications as fall within the true scope of this invention.

CLAIMS

1. An electrical signal input equipment comprising:

a plurality of assemblies (3) of an analog filter (31) for filting higher harmonics and an electric signal recognition means (32),

a multiplexer means (4) connected with said plurality of assemblies (3) of said analog filter (31) and said electrical signal recognition means (32),

a digital filter (5) which is input input signals periodically every predetermined period and output genuine output signals exclusively under conditions that two consecutive input signals are identical to each other,

a demultiplexer means (6) which distributes said genuine output signals of said digital filter (5) in synchronization with said multiplexer means (4), and

a synchronization means (7) which controls said demultiplexer means (6) and said multiplexer means (4) in synchronization to each other.

2. An electrical signal input equipment in accordance with claim 1, wherein the time period in which said digital filter (5) is allowed to receive input signals is adjustable.

3. An electrical signal input equipment in accordance with claim 1 or 2, wherein the time period in which said digital filter (5) is allowed to be individually selected in response to each of said assemblies (3) of an analog filter (31) for filting higher harmonics and an electric signal

recognition means (32).

Fig. 1

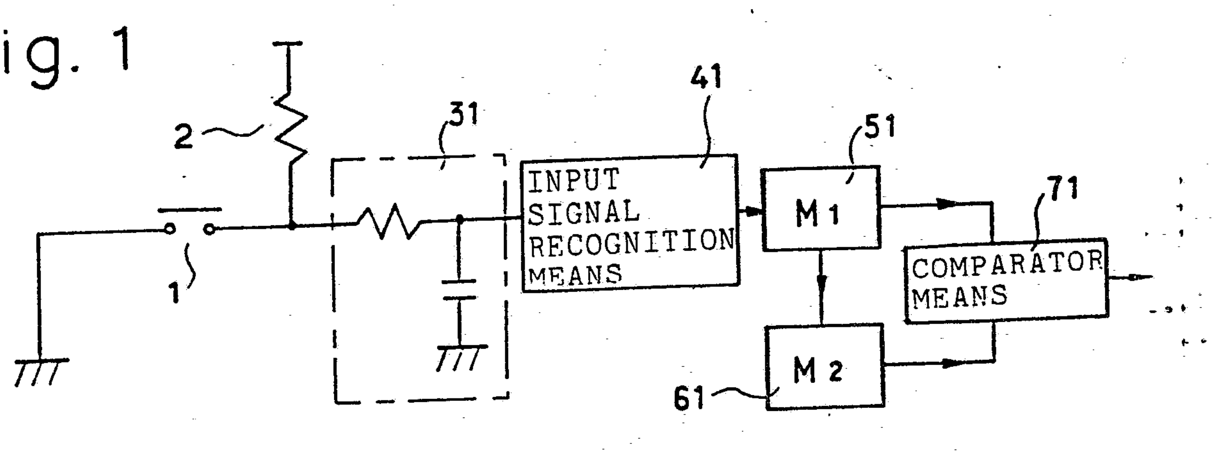
2
31
41
51
71
1
61
INPUT SIGNAL RECOGNITION MEANS
M1
M2
COMPARATOR MEANS

Fig. 2

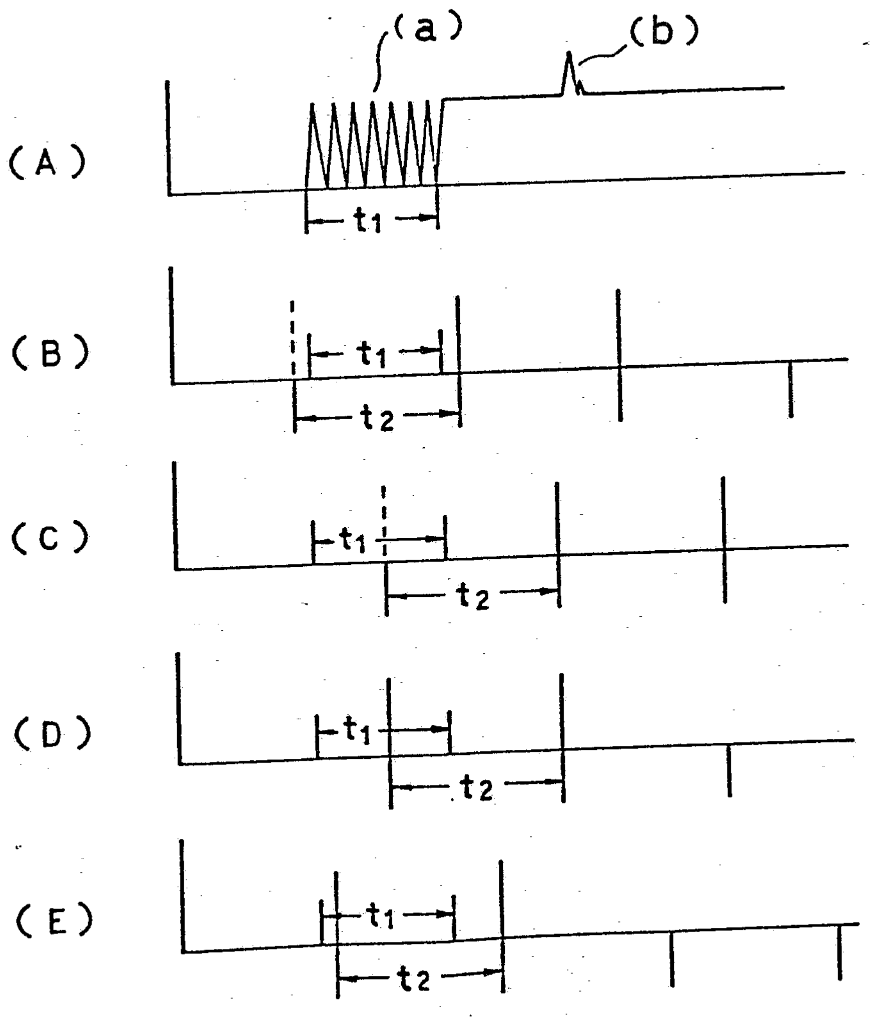
(a)
(b)
(A)
(B)
(C)
(D)
(E)
t1
t2

Fig. 3

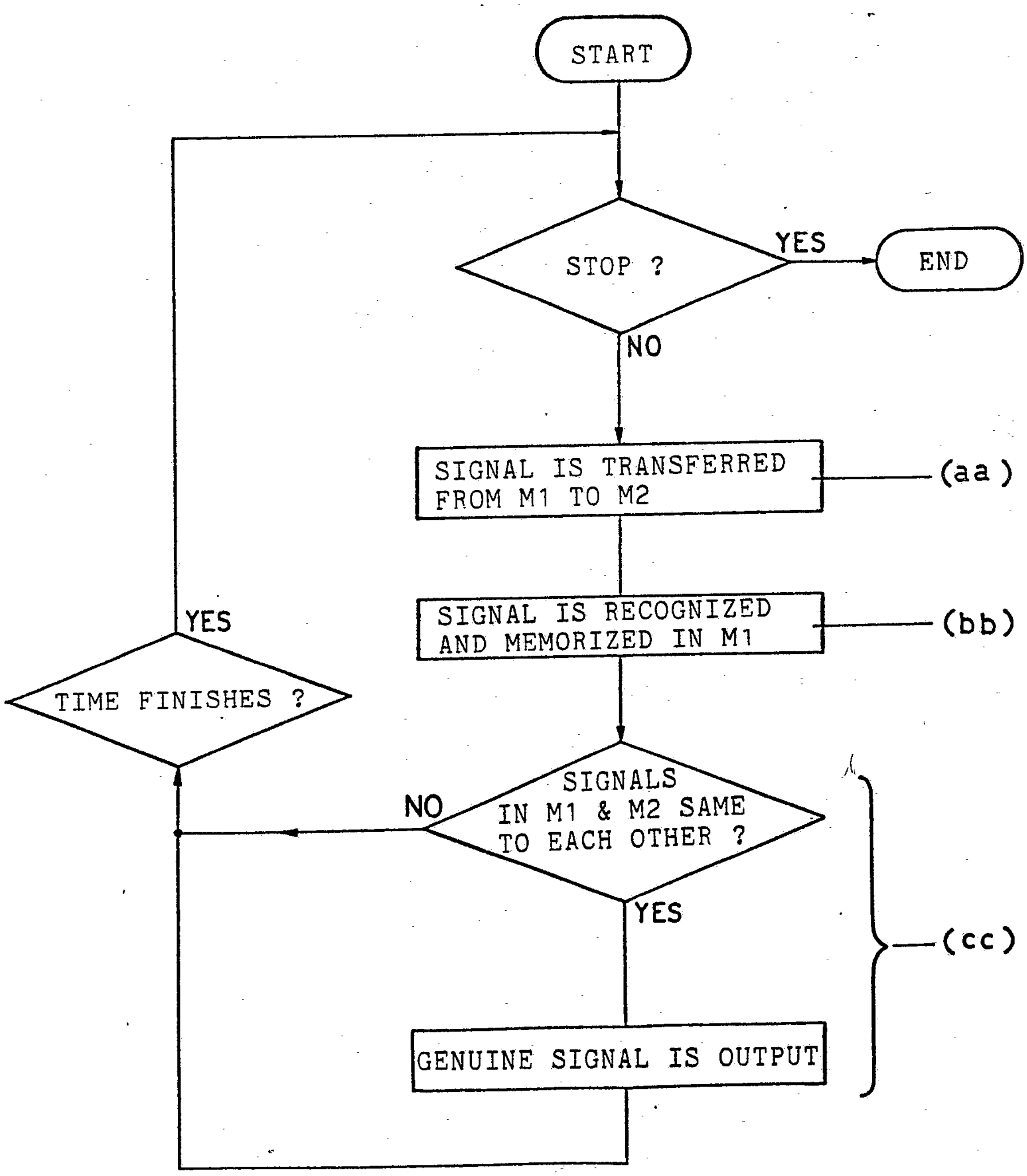
START
STOP ?
YES
END
NO
SIGNAL IS TRANSFERRED FROM M1 TO M2
(aa)
SIGNAL IS RECOGNIZED AND MEMORIZED IN M1
(bb)
YES
TIME FINISHES ?
NO
SIGNALS IN M1 & M2 SAME TO EACH OTHER ?
YES
(cc)
GENUINE SIGNAL IS OUTPUT

Fig. 4

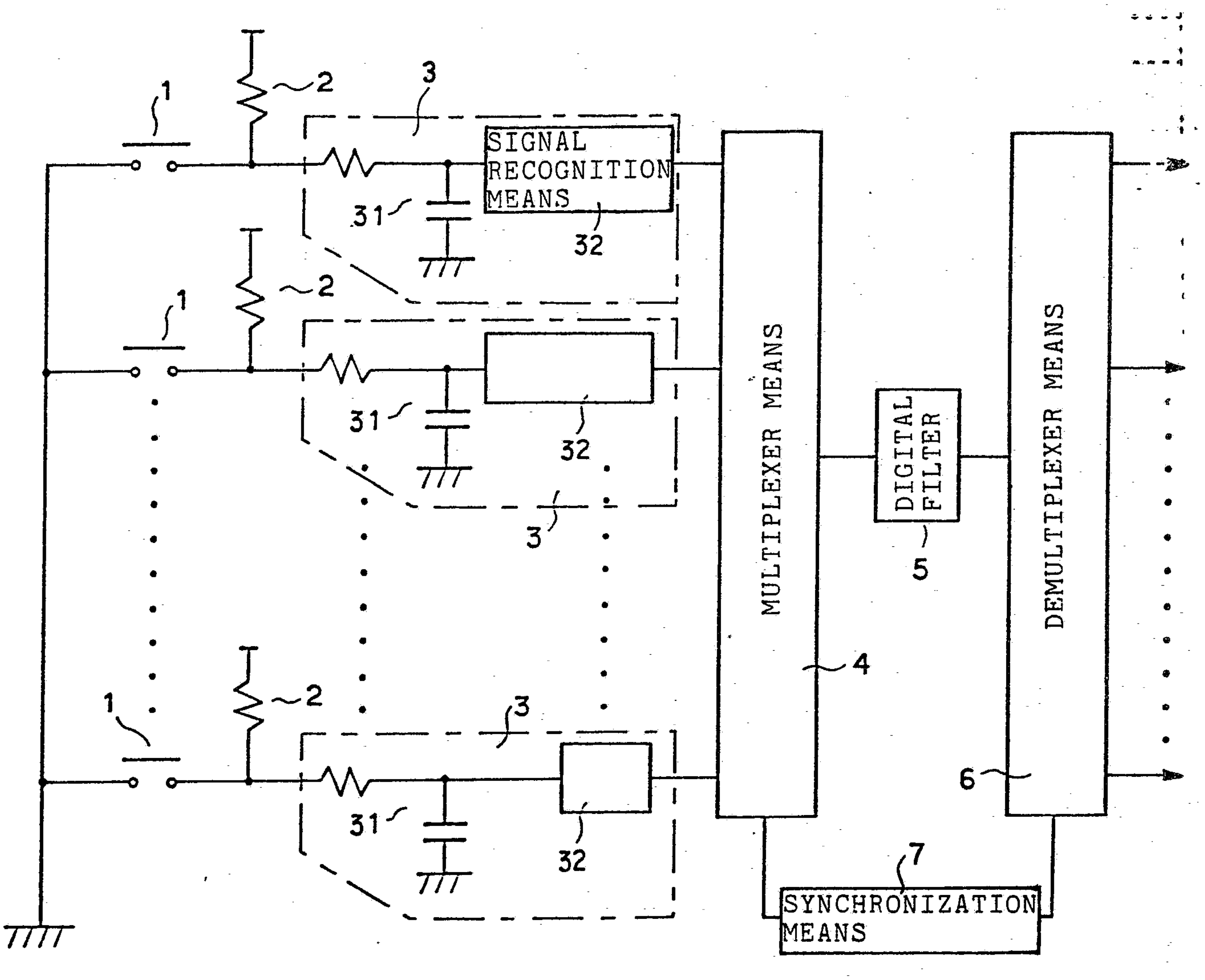
1
2
3
SIGNAL RECOGNITION MEANS
31
32
MULTIPLEXER MEANS
4
DIGITAL FILTER
5
DEMULTIPLEXER MEANS
6
7
SYNCHRONIZATION MEANS

Fig. 5

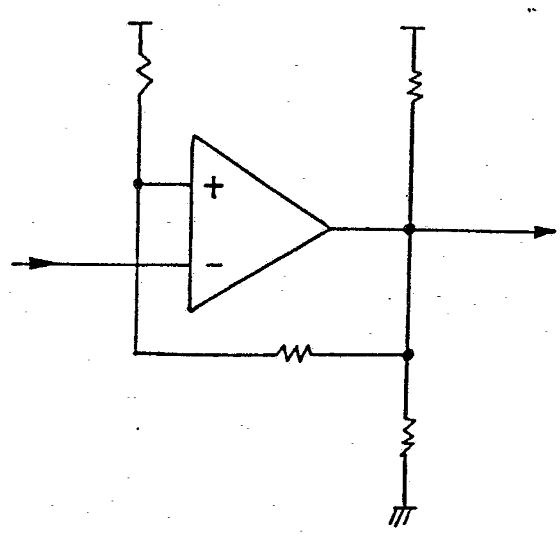


Fig. 6

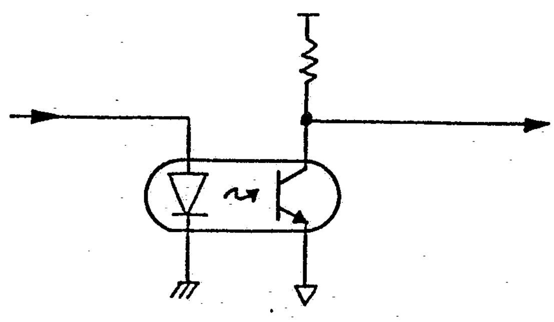

Fig. 7

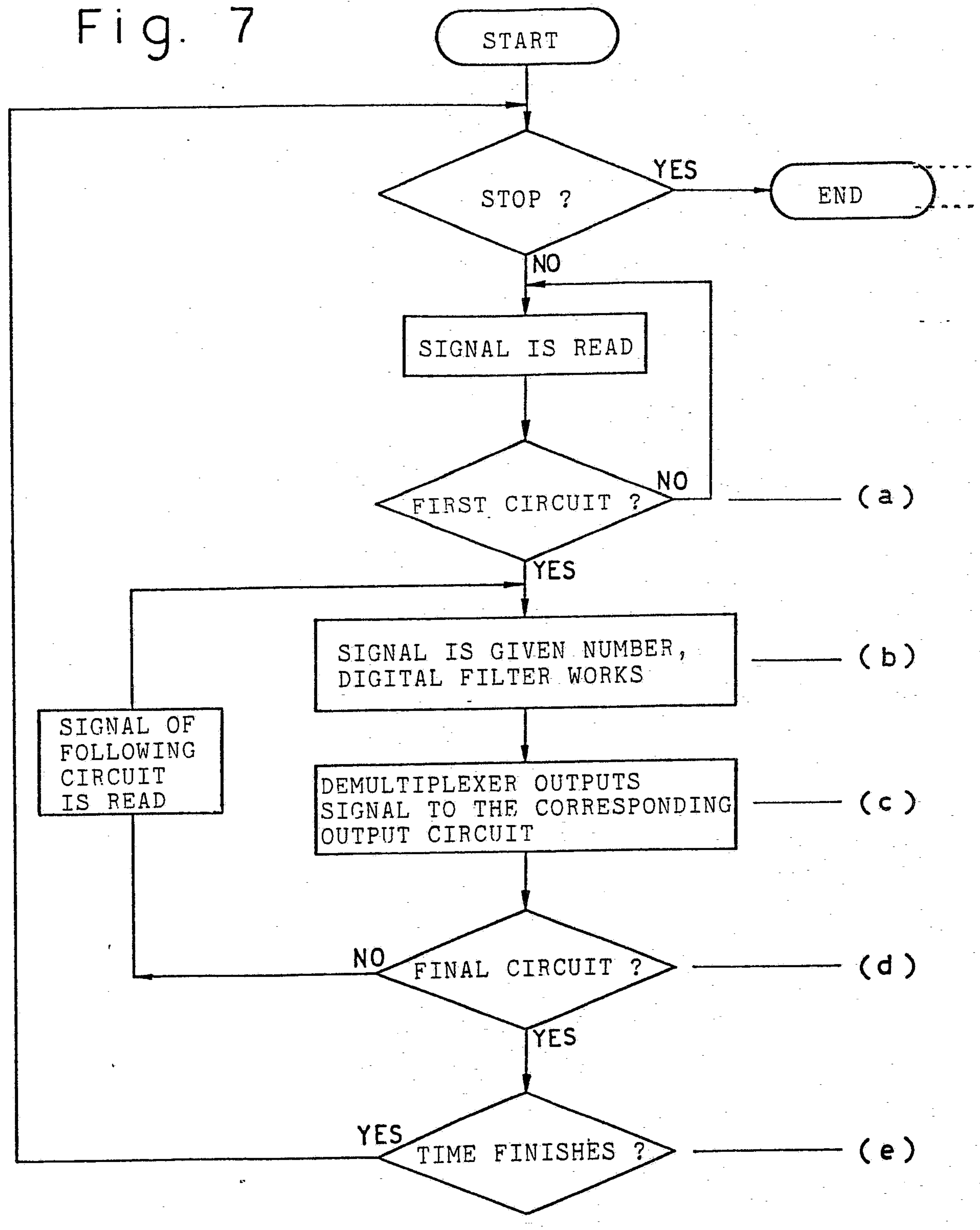
START
STOP ?
YES
END
NO
SIGNAL IS READ
FIRST CIRCUIT ?
NO
(a)
YES
SIGNAL IS GIVEN NUMBER, DIGITAL FILTER WORKS
(b)
SIGNAL OF FOLLOWING CIRCUIT IS READ
DEMULTIPLEXER OUTPUTS SIGNAL TO THE CORRESPONDING OUTPUT CIRCUIT
(c)
NO
FINAL CIRCUIT ?
(d)
YES
YES
TIME FINISHES ?
(e)

# INTERNATIONAL SEARCH REPORT

International Application No PCT/JP88/00077

**I. CLASSIFICATION OF SUBJECT MATTER** (if several classification symbols apply, indicate all) [6]

According to International Patent Classification (IPC) or to both National Classification and IPC

Int.Cl$^4$ G05B15/02, 9/02, 21/02

**II. FIELDS SEARCHED**

Minimum Documentation Searched [7]

| Classification System | Classification Symbols |
|---|---|
| IPC | G05B15/02, 9/02, 21/02 |

Documentation Searched other than Minimum Documentation to the Extent that such Documents are Included in the Fields Searched [8]

| | |
|---|---|
| Jitsuyo Shinan Koho | 1926 - 1988 |
| Kokai Jitsuyo Shinan Koho | 1971 - 1988 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, A, 54-67181 (Fuji Xerox Co., Ltd.) 30 May 1979 (30. 05. 79) Page 1, lower right column, lines 6 to 12 and page 2, upper left column, line 18 to page 3, upper left column, line 14 (Family: none) | 1-3 |
| Y | "A/D·D/A Converter application manual", Second Edition, 1 May 1977 (01. 05. 77) Publicated by Electronics Digest, P.118-124 | 1-3 |
| Y | JP, A, 57-147710 (Nippon Denshi Kiki Kabushiki Kaisha) 11 September 1982 (11. 09. 82) Page 2, lower left column, line 13 to page 3, upper right column, line 7 (Family: none) | 2-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 20, 1988 (20. 04. 88) | May 2, 1988 (02. 05. 88) |
| **International Searching Authority** | **Signature of Authorized Officer** |
| Japanese Patent Office | |